# FASCICULE DE BREVET EUROPEEN

(11) **EP 0 504 044 B1**
(45) Date de publication et mention de la délivrance du brevet: **08.01.1997**
(21) Numéro de dépôt: 92400631.5
(22) Date de dépôt: 11.03.1992
(51) Int. Cl.: E05B 63/04, E05B 15/02

(54) **Armoire à porte verrouillable et retournable, et système comportant une telle armoire**
Schrank mit verriegelbarer und umwendbarer Tür, und ein System mit einem solchen Schrank
Cabinet with lockable and reversible door, and a system comprising such a cabinet

(30) Priorité: 12.03.1991 FR 9102951
(43) Date de publication de la demande: 16.09.1992
(73) Titulaire: LEGRAND, F-87045 Limoges Cédex (FR)
(72) Inventeur: Baudouin, Pascal, F-76000 Rouen (FR); Robbes, Jean-Pierre, F-76300 Sotteville les Rouen (FR)
(74) Mandataire: CABINET BONNET-THIRION

(56) Documents cités:
- EP-A- 0 261 266
- CH-A- 461 979
- DE-A- 2 206 336
- FR-A- 946 569

## Description

La présente invention concerne d'une manière générale les armoires comportant une porte équipée d'un dispositif de fermeture propre à son verrouillage sur le dormant auquel elle est articulée.

Elle vise plus précisément le cas où le dispositif de fermeture équipant cette porte comporte, lui-même, extérieurement, pour la commande d'au moins un pêne et/ou un loquet, un organe de commande, tel qu'une poignée, qui, monté rotatif sur la porte, nécessite pour son intervention, la présence d'un premier perçage dans celle-ci, et auquel il est associé, pour le verrouillage de l'ensemble, un organe de condamnation, tel qu'un barillet de serrure, imposant la présence d'un deuxième perçage dans la porte, à distance du premier.

Des armoires correspondantes se trouvent notamment décrites dans les documents DE-U-70 14950, EP-A-157 159 et EP-A-261 266.

Elles trouvent en particulier leur application pour le logement de matériel électrique.

L'un des problèmes à résoudre lors de leur fabrication tient à ce que, pour une standardisation de cette fabrication, il est souhaitable que leur porte soit retournable, c'est-à-dire que l'on puisse, au gré des nécessités, en inverser le montage, en l'articulant sur le dormant soit à droite, avec alors l'organe de commande de son dispositif de fermeture disposé à main gauche, soit à gauche, avec alors cet organe de commande disposé à main droite.

Les difficultés sont de deux ordres.

Il y a celles ayant trait à l'implantation même de l'organe de commande et de l'organe de condamnation, et il y a celles ayant trait à la commande du ou des pênes mis en oeuvre.

S'agissant de l'implantation de l'organe de commande et de l'organe de condamnation, une première solution consiste à ne prévoir pour eux qu'un seul perçage dans la porte, en le disposant sur l'axe horizontal médian de celle-ci.

Mais l'organe de condamnation étant dès lors coaxial de l'axe de pivotement de l'organe de commande, le couple de verrouillage dont est capable cet organe de condamnation est le plus souvent insuffisant.

Suivant une deuxième solution, qui est celle faisant l'objet du document EP-A-157 159, deux perçages distincts sont prévus dans la porte, l'un pour l'organe de commande, l'autre pour l'organe de condamnation, et il s'agit de perçages qui, identiques l'un à l'autre, sont symétriques l'un de l'autre par rapport à l'axe horizontal médian de la porte.

Ils peuvent ainsi se substituer l'un à l'autre lors du retournement de la porte.

Mais les dispositions annexes à mettre en oeuvre sont relativement complexes.

De même, dans le document EP-A-261 266, deux perçages sont prévus, l'un pour l'organe de commande, l'autre pour l'organe de condamnation.

En outre, dans le document EP-A-261 266, il est prévu, sur la porte, à l'extérieur de celle-ci, une embase, qui s'étend de l'un à l'autre des deux perçages.

S'agissant des pênes, il est usuellement prévu, pour un maintien correct de la porte, en sus d'un loquet calé en rotation sur l'organe de commande, deux pênes, l'un qui intervient à la partie haute de la porte, l'autre qui intervient à sa partie basse.

Le plus souvent à ce jour, ces pênes se déplacent en sens opposés lors de leur commande, et, pour cette commande, il leur est à chacun individuellement associé une tringle, qui, par une crémaillère, engrène avec une came calée en rotation sur l'organe de commande.

Lors du retournement de la porte, il est nécessaire de faire passer cette tringle d'un côté à l'autre de la came.

Les opérations nécessaires à ce retournement s'en trouvent largement compliquées.

La présente invention a d'une manière générale pour objet des dispositions de nature à éviter ces inconvénients, et, plus précisément, de nature à faciliter le retournement de la porte lorsqu'un tel retournement est à effectuer.

De manière plus précise, elle a tout d'abord pour objet, suivant un premier aspect, une armoire comportant une porte équipée d'un dispositif de fermeture propre à son verrouillage sur le dormant auquel elle est articulée, ce dispositif de fermeture comportant lui-même, à l'extérieur de la porte, pour la commande d'au moins un pêne et/ou un loquet, un organe de commande, tel que poignée, monté rotatif, la porte comportant, pour l'intervention de l'axe de rotation de l'organe de commande, un perçage central, et, à distance de ce perçage central, pour l'intervention d'un organe de condamnation de l'organe de commande, deux perçages latéraux, ledit organe de condamnation étant susceptible d'intervenir par l'un ou l'autre de ces perçages latéraux pour la condamnation de l'organe de commande sur la porte, et une embase intervenant extérieurement, à la surface de la porte, au droit, au moins, des deux perçages latéraux, le perçage central étant disposé sur l'axe horizontal médian de la porte, et les deux perçages latéraux étant identiques l'un à l'autre et symétriques l'un de l'autre par rapport au centre du perçage central.

Par exemple, l'embase forme une pièce qui, distincte de la porte, est dûment rapportée sur celle-ci, et, en correspondance avec les perçages latéraux, elle présente elle-même deux trous.

Préférentiellement, l'un au moins de ces trous est occulté par un opercule défonçable.

Quoi qu'il en soit, le parti est pris, suivant l'invention, de prévoir systématiquement, en attente, dans la porte, trois perçages, dont seuls deux sont normalement utilisés en service.

En effet, suivant le sens de montage de la porte, seul l'un des perçages latéraux est utilisé.

L'autre se trouve recouvert par l'embase associée dont le trou correspondant est, au moins initialement, occulté.

Lors d'un retournement de la porte, il suffit de défoncer l'opercule de ce trou pour avoir accès au perçage sous-jacent.

Pour le cas où, en raison de retournements successifs, ce trou se trouverait déjà dégagé, il est prévu, dans le cadre de l'invention, d'associer, de manière amovible, à l'embase, un cache propre à occulter un tel trou.

En variante, l'embase fait partie intégrante de la porte et elle présente par elle-même les perçages de celle-ci.

Quoi qu'il en soit, grâce à la présence de trois perçages dans la porte, les opérations nécessaires au retournement de celle-ci se trouvent largement simplifiées.

En effet, il suffit, globalement, pour ce retournement, de retirer le cache éventuel, de dégager l'organe de commande de la came avec laquelle il est en prise, de retourner cet organe de commande, de le remettre en prise avec la came, de remettre le cache, après avoir éventuellement défoncé l'opercule correspondant de l'embase si cet opercule est encore présent, puis de procéder au retournement proprement dit de la porte, en la faisant pivoter de 180° dans son plan autour d'un axe perpendiculaire à ce plan.

Suivant un deuxième aspect, une armoire suivant une variante de l'invention est encore caractérisée en ce que, le dispositif de sa porte comportant deux pênes, l'un intervenant à la partie haute de cette porte, l'autre intervenant à sa partie basse, ces deux pênes sont soumis en commande à une tringle unique, qui, par une partie formant crémaillère, engrène avec une came calée en rotation sur l'organe de commande, et en ce que, à ces pênes, il est associé des gâches qui, portées en correspondance par le dormant, présentent, chacune de manière symétrique par rapport à leur axe médian, deux entrées.

Ainsi, lors de leur commande, les deux pênes se déplacent dans le même sens, et, en raison même de la symétrie des gâches correspondantes, qui simplifie la pose de celles-ci, aucune intervention n'est avantageusement à faire, lors du retournement de la porte, sur la tringle qui en assure la commande.

Les opérations nécessaires à ce retournement s'en trouvent encore simplifiées.

Bien entendu, des moyens de butée sont prévus dans tous les cas pour limiter la course de la tringle à la fermeture, sa course à l'ouverture se trouvant corollairement limitée par le loquet associé.

La nature même de ces moyens de butée peut nécessiter une intervention lors du retournement de la porte.

Mais, suivant une forme particulière de réalisation, cette intervention peut avantageusement être évitée.

En effet, suivant cette forme de réalisation, ces moyens de butée comportent au moins un cliquet, qui, monté basculant, présente, d'une part, un bec, par lequel il est adapté à porter par simple gravité sur la tringle, et, d'autre part, un épaulement, par lequel il est adapté à s'arc-bouter à celle-ci lorsque le bec est engagé dans un évidement prévu à cet effet dans la tringle.

En pratique, cet engagement intervient de lui-même, par gravité, en raison même du défilement de la tringle au droit du cliquet.

En pratique, également, il est prévu, en attente, suivant des dispositions opposées, deux cliquets, qui sont destinés à limiter en alternance la course de la tringle dans un sens ou dans l'autre suivant le sens de montage de la porte.

Ainsi, c'est, alternativement, l'un ou l'autre de ces cliquets qui devient systématiquement actif suivant que la porte est montée dans un sens, ou que, après retournement, elle est montée dans le sens opposé au précédent, cependant que l'autre cliquet devient systématiquement inactif.

Mais, pour ce faire, il n'est avantageusement besoin d'aucune intervention spécifique pour produire les moyens de butée nécessaires à la limitation de la course de la tringle à la fermeture.

Suivant un troisième aspect, la présente invention a encore pour objet un système comportant une armoire dont une porte est équipée d'un dispositif de fermeture propre à son verrouillage sur le dormant auquel elle est articulée, ce dispositif de fermeture comportant lui-même, à l'extérieur de la porte, pour la commande d'au moins un pêne et/ou un loquet, un organe de commande, tel que poignée, monté rotatif, la porte comportant, pour l'intervention de l'axe de rotation de l'organe de commande, un perçage central, et, à distance de ce perçage central, pour l'intervention d'un organe de condamnation de l'organe de commande, deux perçages latéraux, ledit organe de condamnation étant susceptible d'intervenir par l'un ou l'autre de ces perçages latéraux pour la condamnation de l'organe de commande sur la porte, et une embase intervenant extérieurement, à la surface de la porte, au droit, au moins, des deux perçages latéraux, le perçage central étant disposé sur l'axe horizontal médian de la porte, et les deux perçages latéraux étant identiques l'un à l'autre et symétriques l'un de l'autre par rapport au centre du perçage central, le système comportant, outre ledit organe de commande sur la porte, qui est un organe de commande condamnable, un deuxième organe de commande sous forme d'un simple bouton, les deux organes de commande étant interchangeables.

Avec un tel système l'organe de commande, qui est un organe de commande condamnable, peut donc être substitué à un autre organe de commande sous forme d'un simple bouton.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue en perspective d'une armoire suivant l'invention, représentée fermée, pour un premier sens de montage de sa porte ;
la figure 2 est, à échelle supérieure, une vue en perspective éclatée d'une partie du dispositif de fermeture équipant cette porte ;
la figure 3 est, à échelle encore supérieure, une vue en élévation, suivant la flèche III de la figure 2, de l'embase que comporte suivant l'invention ce dispositif de fermeture ;
la figure 4 est une vue partie en élévation latérale, partie en coupe longitudinale, suivant la ligne IV-IV de la figure 3, de cette embase ;
les figures 5, 6, 7, 8 et 9 sont des vues en coupe reprenant chacune respectivement à échelle supérieure les détails de la figure 4 repérés par des encarts V, VI, VII, VIII et IX sur cette figure 4 ;
la figure 10 est, à l'échelle des figures 3 et 4, une vue en coupe longitudinale du cache éventuellement associé à l'embase précédente, suivant la ligne X-X de la figure 2 ;
la figure 11 est une vue en coupe transversale de ce cache, suivant la ligne XI-XI de la figure 10 ;
la figure 12 est une vue en élévation, suivant la flèche XII de la figure 2, de l'organe de commande, en l'espèce une poignée, du dispositif de fermeture de la porte de l'armoire suivant l'invention ;
la figure 13 est une vue partie en coupe longitudinale et partie en élévation latérale, suivant la ligne brisée XIII-XIII de la figure 12, de cet organe de commande ;
la figure 14 est, suivant la flèche XIV de la figure 1, une vue partielle en élévation de la porte de l'armoire suivant l'invention, supposée,dégagée de son dispositif de fermeture ;
la figure 15 est, suivant la ligne XV-XV de la figure 1, et à échelle supérieure, une vue partielle en coupe de l'armoire suivant l'invention, porte fermée ;
la figure 16 est une vue en perspective de cette armoire analogue à celle de la figure 1, après ouverture de sa porte ;
la figure 17 est une vue en perspective éclatée de la tringle portant les pênes du dispositif de fermeture de cette porte, et de certains des composants qui lui sont associés ;
la figure 18 est, à échelle supérieure, une vue en perspective de l'un de ces composants, en l'espèce la came propre à la commande de cette tringle ;
la figure 19 est, suivant la flèche XIX de la figure 17, et avec un arrachement local, une vue en élévation latérale du boîtier dans lequel coulisse la tringle ;
la figure 20 est, à échelle différente, et avec un arrachement local, une vue en perspective d'un des guides dans lequel coulisse également cette tringle ;
la figure 21 est, à échelle différente, une vue en perspective d'une des gâches prévues sur le dormant de l'armoire suivant l'invention ;
la figure 22 est une vue en coupe longitudinale de cette gâche, suivant la ligne XXII-XXII de la figure 21 ;
la figure 23 en est une vue en coupe transversale, suivant la ligne XXIII-XXIII de la figure 21 ;
les figures 24A, 24B, 24C, 24D, 24E et 24F sont, à échelle inférieure, des vues en perspective, qui, analogues à celles des figures 1 et 16, illustrent les diverses opérations à effectuer pour le retournement de la porte de l'armoire suivant l'invention ;
la figure 25 est une vue en perspective d'un autre organe de commande susceptible d'équiper son dispositif de fermeture ;
les figures 26 et 27 sont des vues en coupe qui illustrent de manière schématique une variante de réalisation des moyens de butée associés à la tringle que comporte ce dispositif de fermeture ;
les figures 28 et 29 reprennent, chacune respectivement, une partie des figures 26 et 27, pour une variante de réalisation ;
les figures 30 et 31 reprennent, également, chacune respectivement, une partie des figures 26 et 27, pour une autre variante de réalisation des moyens de butée en question.

De manière connue en soi, et tel qu'illustré sur ces figures, l'armoire 10 à laquelle est destinée l'invention comporte, globalement, un dormant 11 et une porte 12 articulée par des gonds à ce dormant 11 le long d'un des bords verticaux de celui-ci.

Dans la forme de réalisation représentée, la porte 12 est articulée le long du bord vertical droit du dormant 11.

Le problème est de pouvoir l'articuler si désiré à son bord vertical gauche.

Le dormant 11 ne relevant pas de la présente invention, il ne sera pas décrit dans tous ses détails ici, et il n'a été schématisé que par son contour sur la plupart des figures.

Il suffira d'indiquer que, pour l'étanchéité de son volume intérieur, il forme en façade un cadre 13 contre lequel vient s'écraser, lorsque la porte 12 est fermée, et tel que représenté à la figure 15, un joint d'étanchéité 14 porté à cet effet sur sa face interne par cette porte 12.

De manière également connue en soi, la porte 12 est équipée d'un dispositif de fermeture 16 propre à son verrouillage sur le dormant 11.

Ce dispositif de fermeture 16 comporte, lui-même, extérieurement, pour la commande, intérieurement, d'au moins un pêne 18 et/ou un loquet 65, explicité ultérieurement, un organe de commande 20, qui est monté rotatif sur la porte 12, autour d'un axe horizontal perpendiculaire à son axe horizontal médian M, et qui nécessite, pour son intervention, la présence d'un premier perçage 21, ou perçage central, dans celle-ci.

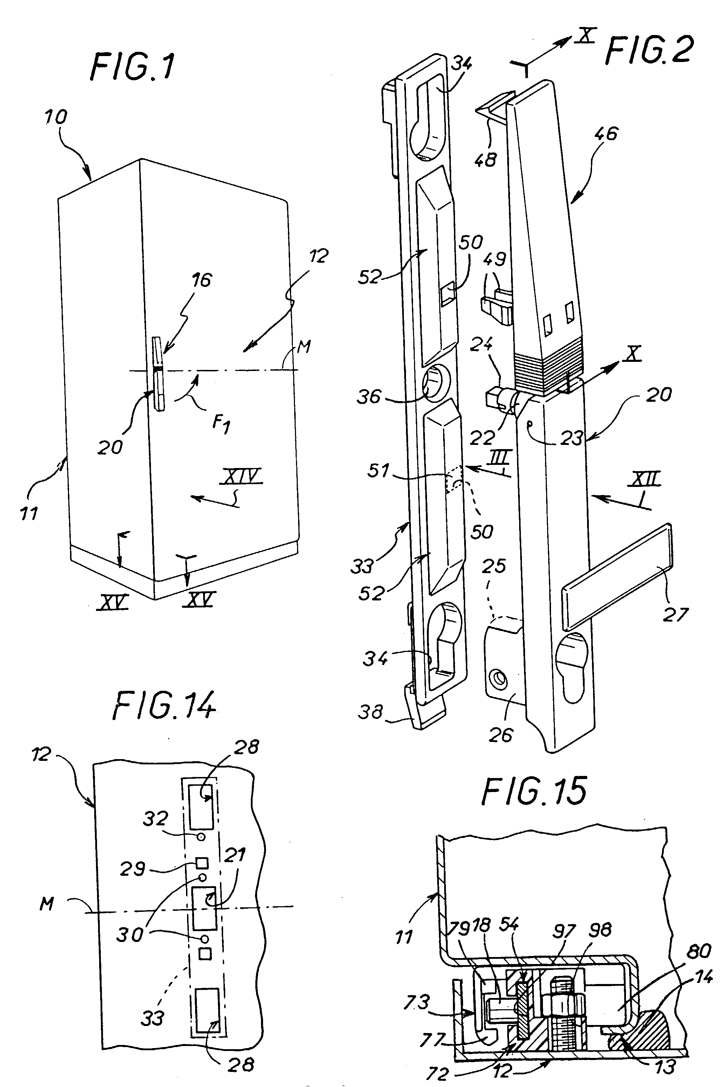

Dans la forme de réalisation représentée sur les figures 1 à 24, l'organe de commande 20 est une poignée.

A l'une de ses extrémités, cette poignée est équipée d'une tête sphérique 22, formant rotule, qui lui est articulée par un axe transversal 23 et dont est solidaire, pour la commande du ou des pênes 18 et/ou du loquet 65, suivant des modalités décrites plus en détail ultérieurement, un carré d'entraînement 24.

Ce carré d'entraînement 24 traverse la porte 12 à la faveur de son perçage central 21.

A l'autre extrémité de la poignée formant l'organe de commande 20, il est associé un organe de condamnation 25 destiné à en interdire la manoeuvre si désiré.

Cet organe de condamnation 25 ne relevant pas non plus de la présente invention, il n'a été schématisé que partiellement, et par son contour, sur la figure 2.

Il s'agit par exemple d'un barillet de serrure de type usuel.

Quoi qu'il en soit, il est porté par l'organe de commande 20 à la faveur d'un logement 26, qui est prévu à cet effet sur l'organe de commande 20 en saillie sur sa face interne, et qui débouche à l'extérieur sous le contrôle d'un cache 27 monté pivotant sur cet organe de commande 20, et, pour son intervention, il impose la présence, dans la porte 12, d'un deuxième perçage 28, ou perçage latéral, à distance du perçage central 21.

Suivant l'invention, le perçage central 21 de la porte 12 étant disposé sur l'axe horizontal médian M de celle-ci, cette porte 12 comporte un deuxième perçage latéral 28, qui, identique au premier, est symétrique de celui-ci par rapport au centre du perçage central 21.

Autrement dit, il y a, suivant l'invention, outre le perçage central 21, deux perçages latéraux 28, qui sont identiques l'un à l'autre et symétriques l'un de l'autre par rapport au centre du perçage central 21.

Dans la forme de réalisation représentée, le perçage central 21 et les deux perçages latéraux 28 sont de contour rectangulaire allongé perpendiculairement à l'axe horizontal médian M de la porte 12.

Par exemple, et tel que représenté, ces perçages 21 et 28 sont tous identiques.

Mais il n'en est pas obligatoirement ainsi.

En pratique, outre ces perçages 21 et 28, qui en sont les perçages principaux, la porte 12 présente, également, pour des raisons explicitées ultérieurement, alignés avec les perçages 21 et 28, deux perçages carrés 29, de moindres dimensions, qui encadrent le perçage central 21, symétriquement de part et d'autre de l'axe horizontal médian M, deux perçages ronds 30, qui, de manière semblable, encadrent également ce perçage central 21, entre celui-ci et les perçages carrés 29, et, en bordure d'un des perçages latéraux 28, entre celui-ci et le perçage carré 29 correspondant, un perçage rond 32.

Il est à souligner que tous ces perçages 21, 28, 29, 30 et 32 se situent à l'extérieur du joint d'étanchéité 14 et ne sont donc pas susceptibles d'affecter en quoi que ce soit l'étanchéité du volume interne du dormant 11.

Au droit, au moins, des perçages latéraux 28, il intervient, extérieurement, suivant l'invention, à la surface de la porte 12, une embase 33.

Dans la forme de réalisation représentée, cette embase 33 forme une pièce qui, distincte de la porte 12, est dûment rapportée sur celle-ci.

Par exemple, elle peut être réalisée en matière synthétique, alors que la porte 12 est en métal.

Quoi qu'il en soit, en correspondance avec les perçages latéraux 28 de la porte 12, l'embase 33 ainsi mise en oeuvre présente alors elle-même deux trous 34.

Sur la figure 2, ces trous 34 ont été représentés dégagés.

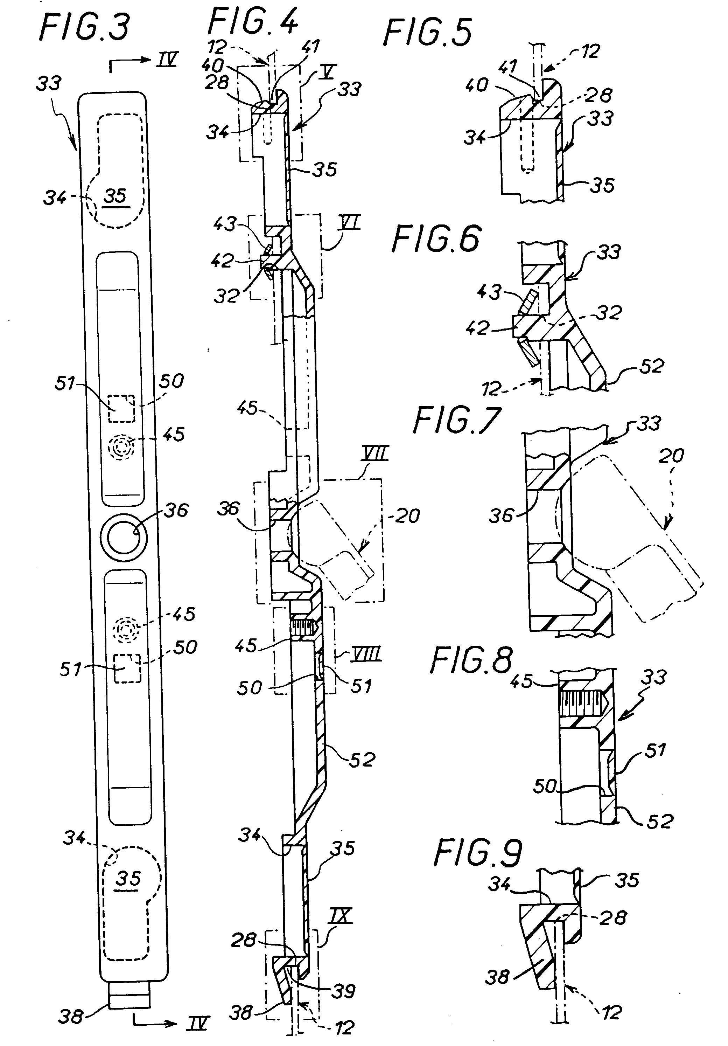

Mais, préférentiellement, et ainsi qu'il est visible sur les figures 3 et 4, l'un au moins d'entre eux, et en pratique chacun d'eux, est initialement occulté par un opercule défonçable 35.

En pratique, l'embase 33 s'étend d'un seul tenant de l'un à l'autre des perçages latéraux 28 de la porte 12, tel que schématisé en traits interrompus sur la figure 14, et, au droit du perçage central 21 de celle-ci, elle présente elle-même un trou central 36.

Dans la forme de réalisation représentée, le trou central 36 de l'embase 33, qui est simplement destiné au passage du carré d'entraînement 24, a, transversalement, un contour circulaire, tandis que le contour de ses trous latéraux 34 est à l'image de celui de l'organe de condamnation 25.

Quoi qu'il en soit, les trous latéraux 34 de cette embase 33 sont symétriques l'un de l'autre par rapport au centre de son trou central 36.

Globalement, l'embase 33 se présente sous la forme d'une baguette de contour rectangulaire.

A l'une de ses extrémités, elle présente, en décrochement, sur sa face interne, une languette 38 par laquelle elle est apte à être engagée derrière la porte 12, à la faveur du perçage latéral 28 correspondant de celle-ci, cette languette 38 formant avec elle une feuillure 39 propre à un tel engagement.

A son autre extrémité, l'embase 33 est encliquetée sur la porte 12, à la faveur de l'autre perçage latéral 28 de cette dernière.

Elle présente à cet effet en saillie sur sa face interne, et en retrait par rapport à son extrémité concernée, un bossage d'encliquetage 40 formant également une feuillure 41 avec elle.

Pour parfaire sa tenue sur la porte 12, l'embase 33 présente, également, en saillie sur sa face interne, et en correspondance avec le perçage 32 de la porte 12, un pion 42, qui, après traversée de ce perçage 32, est apte à coopérer en retenue avec une rondelle frein 43 prenant appui sur la porte 12.

Pour des raisons qui apparaîtront ultérieurement, l'embase 33 présente également, en saillie sur sa face interne, et symétriquement de part et d'autre de son trou central 36, deux puits taraudés 45.

Suivant l'invention, il est associé, de manière amovible, à l'embase 33 ainsi constituée, au moins un cache 46 propre à occulter l'un, au moins, de ses trous latéraux 34.

Dans la forme de réalisation représentée sur les figures 1 à 24, et compte tenu de la nature de l'organe de commande 20 qui y est mis en oeuvre, seul un tel cache 46 est prévu.

Alors que, en position d'attente, et, notamment, en position de fermeture, l'organe de commande 20 s'étend du trou central 36 de l'embase 33 à l'un de ses trous latéraux 34, ce cache 46 s'étend de son trou central 36 à l'autre de ses trous latéraux 34, en continuité avec l'organe de commande 20.

Tant l'organe de commande 20 que le cache 46 s'étendent donc parallèlement à l'embase 33, en étant superposés à celle-ci.

En pratique, le cache 46 est rapporté par encliquetage sur l'embase 33.

Il comporte, pour ce faire, en saillie sur sa face interne, à son extrémité opposée à l'organe de commande 20, une patte d'encliquetage 48 apte à se crocheter sur le bord opposé du trou latéral 34 correspondant de l'embase 33.

Il comporte, également, pour cet encliquetage, en saillie sur sa face interne, deux pattes élastiquement déformables 49 propres à venir conjointement se crocheter sur l'un ou l'autre des perçages carrés 29 de la porte 12, après traversée de trous 50 prévus à cet effet en correspondance sur l'embase 33.

Comme ses trous latéraux 34, les trous 50 que présente ainsi l'embase 33 sont chacun initialement occultés par un opercule défonçable 51.

En pratique, ils affectent chacun respectivement des bossages 52, que forme longitudinalement l'embase 33 de part et d'autre de son trou central 36, et qui sont chacun susceptibles d'être coiffés, en alternance, soit par l'organe de commande 20, soit par le cache 46.

C'est sur la face interne de ces bossages 52 que sont présents les puits taraudés 45.

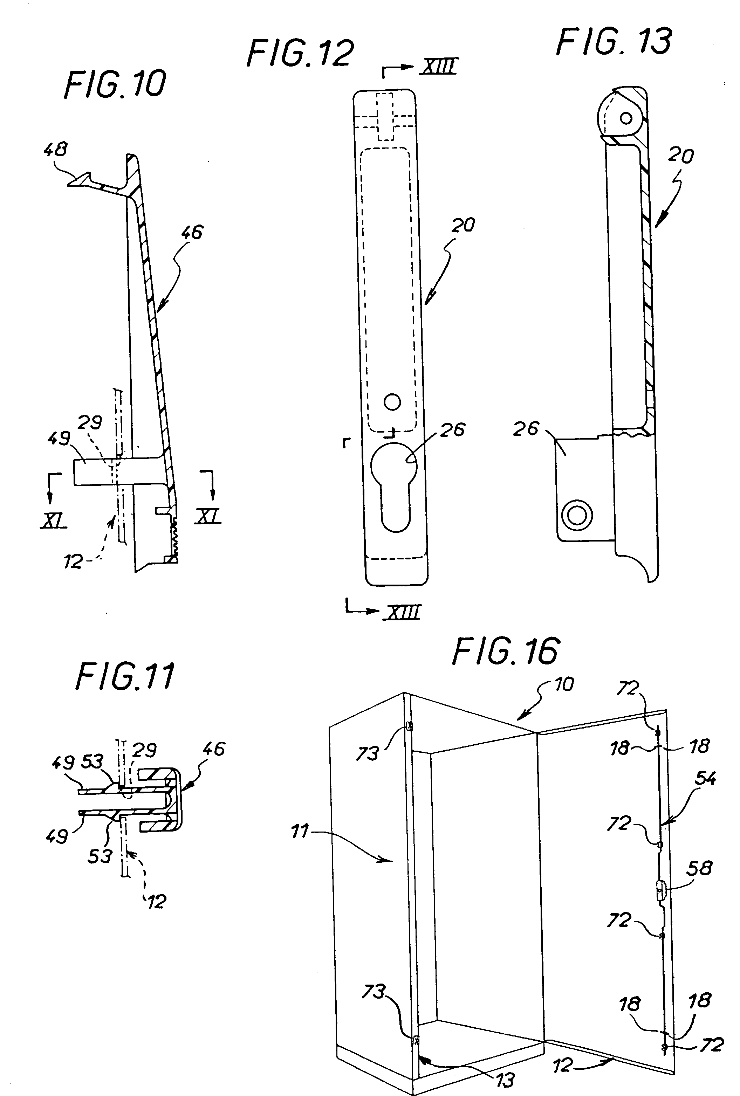

En pratique, les pattes élastiquement déformables 49 du cache 46 s'étendent largement au-delà du bossage 53 par lequel elles sont aptes à se crocheter sur un perçage carré 29 de la porte 12, figure 11, et, pour pouvoir être pincées entre deux doigts, elles sont disposées dos à dos.

La dépose d'un tel cache 4 6 s'en trouve facilitée lorsqu'elle s'avère nécessaire.

Dans la forme de réalisation représentée, le dispositif de fermeture 16 comporte, par ailleurs, intérieurement, deux pênes 18, l'un qui intervient à la partie haute de la porte 12, l'autre qui intervient à sa partie basse.

Suivant l'invention, ces deux pênes 18 sont soumis en commande à une tringle 54 unique, qui, par une partie centrale 55, formant crémaillère, engrène avec une came 56, en l'espèce une came étoilée, susceptible d'être calée en rotation sur l'organe de commande 20, et, plus précisément, sur le carré d'entraînement 24 dont est porteur celui-ci.

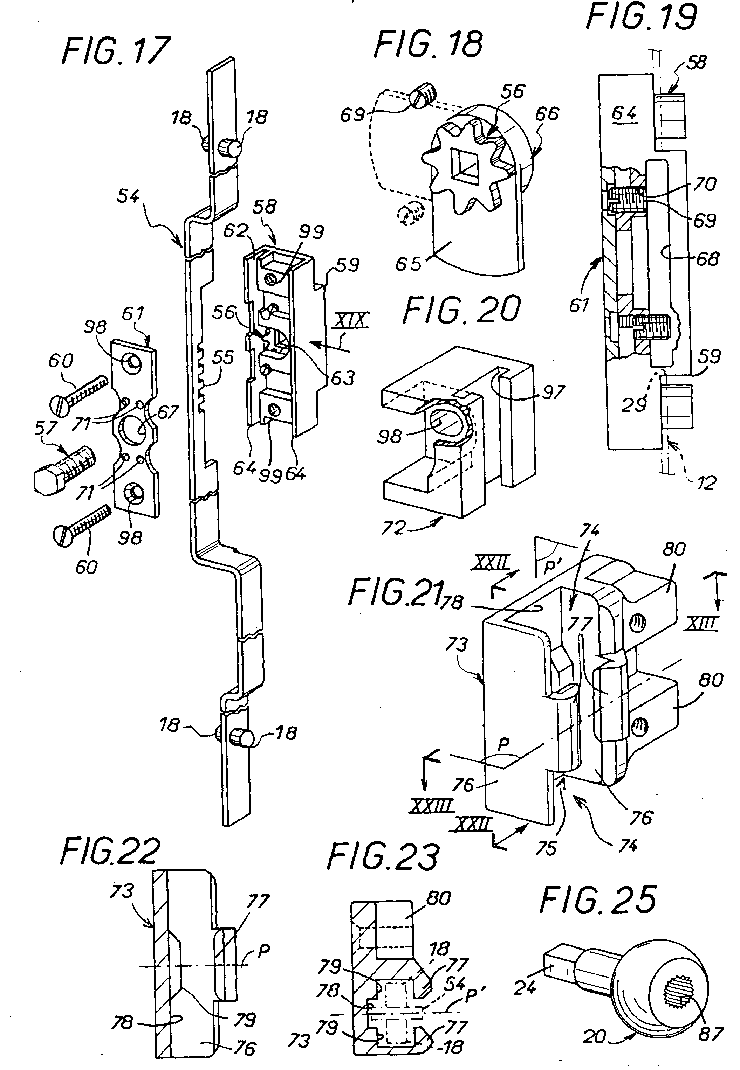

Dans la forme de réalisation représentée, la tringle 54 se présente sous la forme d'un feuillard convenablement plié, figure 17.

Elle présente ainsi une succession de tronçons qui, tous parallèles les uns aux autres, dans le sens de la hauteur de la porte 12, sont décalés les uns par rapport aux autres par des tronçons de raccordement d'équerre avec eux.

Les pênes 18 sont portés par les tronçons d'extrémité de cette tringle 54, et ils s'étendent transversalement par rapport à celle-ci.

En pratique, et pour des raisons qui apparaîtront ultérieurement, la tringle 54 porte ainsi deux autres pênes 18, qui, jumelés, chacun respectivement, avec les précédents, s'étendent en sens opposé par rapport à ceux-ci.

Autrement dit, il y a, dos à dos, deux pênes 18 à chacun des tronçons d'extrémité de la tringle 54.

Tel que représenté, ces pênes 18 peuvent être constitués par de simples goujons convenablement rapportés, par exemple par sertissage, sur la tringle 54.

Il peut également s'agir de rouleaux, galets ou autres organes, montés rotatifs, ou non, sur celle-ci.

Par sa partie centrale 55, formant crémaillère, la tringle 54 est montée coulissante dans un boîtier 58, qui, disposé sur la face interne de la porte 12, est en prise par un bossage 59 avec le perçage central 21 de celle-ci, et qui, à travers cette porte 12, est solidarisé à l'embase 33 associée.

Pour cette solidarisation, deux vis 60 sont prévues, qui, après traversée, d'une part, d'un couvercle 61 rapporté sur le boîtier 58, pour la retenue de la tringle 54, à la faveur de perçages 98 prévus à cet effet sur ce couvercle 61, et, d'autre part, du boîtier 58, à la faveur de perçages 99 prévus à cet effet dans celui-ci, sont destinées à coopérer en vissage avec les puits taraudés 45 de l'embase 33.

La porte 12 est ainsi pincée entre, d'une part, le boîtier 58 et son couvercle 61, et, d'autre part, l'embase 33.

Pour le coulissement de la tringle 54, le boîtier 58 présente, longitudinalement, dans le sens de la hauteur de la porte 12, une saignée 62 que recoupe transversalement, dans sa partie médiane, un logement 63 dans lequel est montée rotative la came étoilée 56.

L'ensemble s'étend entre deux flancs latéraux 64 délimitant longitudinalement le boîtier 58.

En pratique, sur la came étoilée 56 se trouve calé en rotation le loquet 65, figure 18, destiné à venir se crocheter sur le cadre 13 du dormant 11.

Par exemple, et tel que représenté, la came étoilée 56 et le loquet 65 appartiennent à une seule et même pièce 66.

En position d'ouverture, le loquet 65, alors vertical, est en butée sur la surface interne d'un des flancs latéraux 64 du boîtier 58.

L'autre des flancs latéraux 64 du boîtier 58 présente, longitudinalement, une fente 68 pour que, en position d'ouverture, et tel que schématisé en traits interrompus sur la figure 18, le loquet 65, alors horizontal, puisse faire saillie latéralement hors du boîtier 58 et venir ainsi en prise avec le cadre 13 du dormant 11.

Des moyens de butée sont prévus pour limiter dans le sens correspondant la course de la tringle 54.

Dans la forme de réalisation représentée sur les figures 1 à 24, ces moyens de butée comportent une vis 69, qui, en prise avec un perçage taraudé 70 du boîtier 58, est interposée sur le trajet du loquet 65.

Cette vis 69 est accessible à travers un perçage 71 prévu à cet effet dans le couvercle 61.

Ce perçage 71 étant de moindre diamètre que la vis 69, le couvercle 61 assure ainsi très simplement la retenue de celle-ci.

En pratique, et pour des raisons qui apparaîtront ci-après, il y a ainsi, en attente, dans le boîtier 58, deux vis 69, qui, disposées chacune respectivement de part et d'autre de la came étoilée 56, dans le sens de la hauteur de la porte 12, sont chacune respectivement réglables en position dans les perçages taraudés 70 correspondants de ce boîtier 58, et sont destinées à limiter, en alternance, la course de la tringle 54 dans un sens ou dans l'autre, suivant le sens de montage de la porte 12.

En position effacée, et tel que c'est le cas pour l'une d'elles sur les figures 18 et 19, les vis 69 s'étendent à l'écart du trajet du loquet 65, et, donc, à l'écart de la fente 68 du boîtier 58.

En position déployée, et c'est le cas pour l'autre d'entre elles sur les figures 18 et 19, elles interfèrent au contraire avec le trajet du loquet 65, et, donc, avec la fente 68 du boîtier 58.

Les vis 69 s'étendant en bordure de la saignée 62 du boîtier 58, quatre perçages 71 sont prévus, en rectangle, pour des raisons de symétrie, dans le couvercle 61.

Le couvercle 61 présente, par ailleurs, dans sa zone centrale, un perçage 67 donnant accès à la tête, à six pans, d'une vis 57, qui est en prise avec le carré d'entraînement 24 dont est porteur l'organe de commande 20, et qui assure ainsi le maintien de celui-ci, ce carré d'entraînement 24 présentant lui-même axialement à cet effet un alésage taraudé non visible sur les figures.

En pratique, la tête de cette vis 57 porte sur la came étoilée 56.

Outre le boîtier 58, la tringle 54 est également montée coulissante dans des guides 72 échelonnés sur sa hauteur.

Par exemple, et tel que représenté, figure 16, deux guides 72 peuvent ainsi être prévus pour elle de part et d'autre du boîtier 58.

Ces guides 72 sont simplement fixés par vissage sur la porte 12.

L'un d'eux est représenté isolément à la figure 20.

Ils présentent simplement une fente 97 pour le coulissement de la tringle 54, et, pour leur fixation à la porte 12, un perçage 98.

Dans la forme de réalisation représentée, ce dernier est allongé en boutonnière, pour permettre un réglage en position.

Aux pênes 18 sont associées des gâches 73 portées en correspondance par le dormant 11.

Il y a ainsi deux gâches 73, à raison d'une pour chacune des paires de pênes 18 présentes aux tronçons d'extrémité de la tringle 54.

Suivant l'invention, chacune de ces gâches 73 présente, de manière symétrique par rapport à un plan médian P, qui, en pratique, est un plan horizontal, deux entrées 74.

En pratique, ces deux entrées 74 sont formées chacune respectivement par les extrémités d'un évidement allongé 75, dont la section transversale est en forme générale de C, et dont les flancs 76, allongés dans le sens de la hauteur de la porte 12, présentent, dans leur zone médiane au moins, des retours en équerre 77 dirigés l'un vers l'autre.

Au droit de ces retours en équerre 77, le fond 78 de l'évidement allongé 75 présente, en saillie, en bordure des flancs 76, des bossages 79 ayant, longitudinalement, un contour en trapèze.

L'évidement allongé 75 des gâches 73 présente donc, en hauteur, un plan de symétrie P′, qui, en pratique, est un plan vertical.

Par des jambages latéraux 80, eux-mêmes symétriques l'un de l'autre par rapport au plan de symétrie médian P, les gâches 73 sont rapportées, par vissage, sur le dormant 11.

On supposera tout d'abord ci-après que, tel que représenté à la figure 1, l'organe de commande 20 est à main gauche, comme indiqué précédemment, et qu'un cache 46 s'étend au-dessus de lui.

Pour la position de fermeture représentée, et tel que représenté sur les figures 18 et 19, seule l'une des vis 69 est en position déployée.

Pour cette position de fermeture, le loquet 65 s'étend à l'horizontale, tel que schématisé en traits interrompus sur la figure 18, et il porte par sa tranche contre celle des vis 69 qui est dûment en position déployée à cet effet, en limitant ainsi la course, dans le sens de la fermeture, de la tringle 54, puisque celle-ci engrène, par sa partie centrale 55, formant crémaillère, avec la came étoilée 56 sur laquelle il est calé en rotation.

Conjointement, et tel que représenté en trait plein sur la figure 15 et en traits interrompus sur la figure 23, les pênes 18 présents aux tronçons d'extrémité de la tringle 54 sont en prise avec les gâches 73 correspondantes, la tringle 54 s'insérant entre les flancs 76 de celles-ci, parallèlement à ces flancs 76, et sensiblement à mi-distance de ceux-ci.

En pratique, chacun des pênes 18 présents à chacun des tronçons d'extrémité de la tringle 54 s'étend alors entre l'un des retours en équerre 77 de la gâche 73 correspondante et le bossage 79 présent en regard de ce retour en équerre 77.

Pour ouverture de la porte 12, il faut, tout d'abord, après avoir fait pivoter le cache 27, intervenir en déverrouillage sur l'organe de condamnation 25, puis, après l'avoir tiré vers soi, faire pivoter de 90°, vers la droite, tel que schématisé par une flèche F1 sur la figure 1, l'organe de commande 20 ainsi libéré.

Lors de cette ouverture, les pênes 18 échappent tous d'un même côté aux gâches 73, et, plus précisément, aux retours en équerre 77 de celles-ci.

De même, à la fermeture, ils pénètrent tous d'un même côté dans ces gâches 73.

Par exemple, et c'est le cas dans la forme de réalisation représentée, ils y pénètrent par celle de leurs entrées 74 qui est tournée vers le haut.

Si, au lieu d'être articulée le long du bord vertical droit du dormant 11, la porte 12 doit être articulée le long de son bord vertical gauche, il est procédé comme suit.

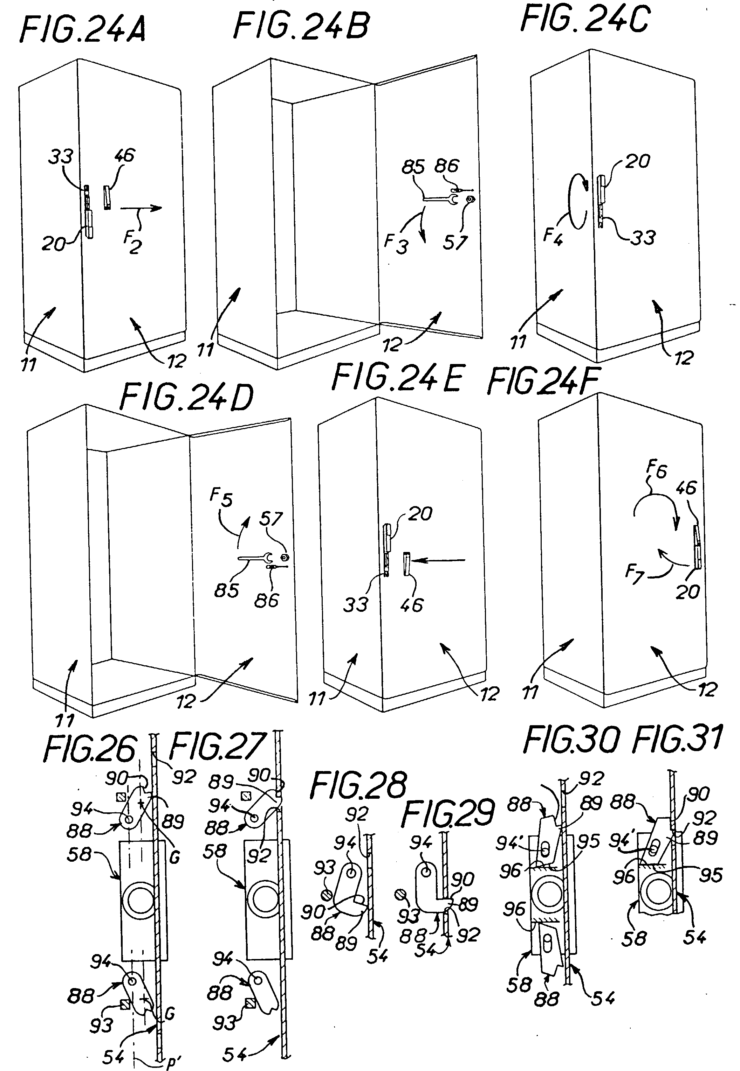

Tout d'abord, le cache 46 est déposé, tel que schématisé par la flèche F2 à la figure 24A.

Ensuite, la porte 12 étant ouverte, et tel que schématisé par une flèche F3 à la figure 24B, il est procédé, à l'aide d'une clé 85, à un desserrage suffisant de la vis 57 assurant le maintien de l'organe de commande 20 pour que le carré d'entraînement 24 dont est porteur celui-ci puisse être dégagé de la came étoilée 56.

Il est procédé, conjointement, à l'aide d'un tournevis 86, au passage en position rétractée de celle des vis 69 qui était en position déployée.

Comme schématisé par une flèche F4 sur la figure 24C, il est procédé ensuite à un pivotement de 180° de l'organe de commande 20 autour de son axe de rotation, ce qui le conduit à s'étendre au-dessus de la partie de l'embase 33 précédemment recouverte par le cache 46 tout en découvrant l'autre partie de cette embase 33.

Après resserrage de la vis 57, tel que schématisé par la flèche F5 sur la figure 24D, et passage en position déployée de l'autre vis 69, il est procédé à la mise en place du cache 46 sur l'embase 33 en dessous de l'organe de commande 20, figure 24E, puis, tel que schématisé par la flèche F6 sur la figure 24F, à un retournement de 180° de la porte 12, par dégondage de cette porte 12, pivotement dans son plan autour d'un axe perpendiculaire à celui-ci, et regondage le long du bord opposé du dormant 11, avec, dans l'intervalle, une dépose des gonds correspondants et leur remise en place de l'autre côté du dormant 11 et une intervention similaire sur les gâches 73 impliquant également un retournement de celles-ci du fait de leur symétrie par rapport à un plan médian horizontal et de l'implantation latérale de leurs jambages latéraux 80.

Une fois la porte 12 ainsi retournée, le cache 46 s'étend alors à nouveau au-dessus de l'organe de commande 20, et, pour l'ouverture de la porte 12, il suffit, comme précédemment, après l'avoir tiré vers soi, de faire pivoter de 90° cet organe de commande 20, mais alors vers la gauche, suivant la flèche F7 de la figure 24F.

Bien entendu, pour la remise en place du cache 46, il a pu être nécessaire d'éliminer l'opercule défonçable 51 correspondant de l'embase 33, si celui-ci y était toujours présent.

Lors d'une fermeture, les pênes 18 pénètrent tous d'un même côté, comme précédemment, dans les gâches 73.

En pratique, compte tenu de l'inversion du sens de rotation de l'organe de commande 20, ils y pénètrent alors encore par celle de leurs entrées 74 qui est tournée vers le haut.

Ainsi, les pênes 18 pénètrent toujours par le haut dans les gâches 73.

La réaction correspondante est donc toujours avantageusement favorable à un redressement de la porte 12 par rapport à ses gonds, et elle va donc à l'encontre du quasi inévitable gauchissement de celle-ci.

En pratique, du fait du retournement appliqué dans l'intervalle aux gâches 73, l'entrée 74 alors concernée de celles-ci est celle opposée à la précédente.

La symétrie de ces gâches 73 par rapport à un plan médian horizontal permet avantageusement de s'en satisfaire.

Dans la variante de réalisation représentée sur la figure 25, l'organe de commande 20 porteur du carré d'entraînement 24 se réduit à un simple bouton, par exemple sphérique, muni en creux d'une empreinte 87 propre à sa commande en rotation.

Il est d'ailleurs envisagé suivant l'invention un système comportant outre l'organe de commande condamnable sur la porte un deuxième organe de commande sous forme d'un simple bouton, les deux organes de commande étant dont interchangeables.

Dans la forme de réalisation représentée, l'empreinte 87 est cannelée.

Mais elle peut bien entendu avoir transversalement un quelconque autre profil.

Dans les variantes de réalisation représentées sur les figures 26 à 31, les moyens de butée prévus pour limiter la course de la tringle 54 comportent au moins un cliquet 88, qui, monté basculant, par une articulation 94, sur la porte 12, ou 5 sur le boîtier 58 porté par celle-ci, présente, d'une part, un bec 89, par lequel il est adapté à porter par simple gravité sur la tringle 54, et, d'autre part, un épaulement 90, par lequel il est adapté à s'arc-bouter à celle-ci lorsque le bec 89 est engagé dans un évidement 92 prévu à cet effet dans cette tringle 54.

Dans la forme de réalisation plus particulièrement représentée sur les figures 26, 27, l'épaulement 90 est sensiblement d'équerre avec le bec 89, et le cliquet 88 est de forme générale longiligne.

En pratique, il y a, en attente, suivant des dispositions opposées, deux cliquets 88, et ceux-ci sont destinés à limiter en alternance la course de la tringle 54 dans un sens ou dans l'autre suivant le sens de montage de la porte 12.

Seul est actif le cliquet 88 qui, pour ce montage, est disposé au-dessus du boîtier 58.

Par son bec 89, il repose sur la tringle 54, en sorte qu'il est en mesure de pénétrer de lui-même dans l'évidement 92 de cette tringle 54 lorsque, lors de la course de fermeture de la tringle 54, cet évidement 92 vient à son niveau.

Son épaulement 90 vient alors en appui sur la tringle 54, figure 27.

Conjointement, l'autre cliquet 88 repose par simple gravité sur une butée 93 prévue à cet effet en saillie sur la porte 12.

Mais c'est lui qui, en substitution au précédent, et suivant les mêmes modalités que celles décrites, devient à son tour actif après un retournement de la porte 12.

Ainsi qu'on le notera, il n'est ainsi avantageusement besoin d'aucune intervention sur ces cliquets 88, lors du retournement de la porte 12.

Les opérations correspondantes s'en trouvent avantageusement simplifiées d'autant.

En pratique, pour qu'un cliquet 88 jusque-là inactif abandonne sa butée 93 lors d'un retournement de la porte 12, il importe que, lorsqu'il est en appui sur cette butée 93, et ainsi qu'il est indiqué sur la figure 26, son centre de gravité G soit à l'écart du plan vertical P˝ passant par son articulation 94, en étant disposé entre ce plan vertical P˝ et la tringle 54.

La configuration d'un tel cliquet 88 est donc établie en conséquence.

Dans la variante de réalisation représentée sur les figures 28 et 29, l'épaulement 90 d'un cliquet 88 appartient au bec 89 de celui-ci, en sorte qu'un tel cliquet 88 est de forme générale coudée.

Pour la retenue de la tringle 54, cet épaulement 90 porte sur la tranche de l'évidement 92 correspondant de celle-ci.

Le fonctionnement est cependant pour le reste du même type que le précédent.

Dans la variante de réalisation représentée sur les figures 30 et 31, chaque cliquet 88 est monté basculant par une articulation à jeu 94′, et il présente un talon 95 par lequel il est apte à prendre appui sur une portée fixe 96.

Dans la forme de réalisation représentée, chaque cliquet 88 est articulé au boîtier 58, et la portée fixe 96 correspondante appartient à ce dernier.

Le fonctionnement est également du même type que le précédent.

La présente invention ne se limite d'ailleurs pas aux formes de réalisation décrites et représentées mais englobe toute variante d'exécution et/ou de combinaison de leurs divers éléments.

En particulier, au lieu de présenter une section transversale réellement carrée, le carré d'entraînement 24 peut avoir une autre section transversale, et par exemple une section transversale rectangulaire, pour faire détrompeur lors du retournement de la porte 12, le perçage de la came correspondante étant établi en conséquence.

En outre, au lieu de former une pièce distincte de la porte 12, l'embase 33 pourrait faire partie intégrante de celle-ci, notamment dans le cas d'une portée moulée ou thermoformée ; elle présente alors par elle-même les perçages de cette porte 12.

Autrement dit, dans ce cas, les "trous", éventuellement occultés, de l'embase 33 forment par eux-mêmes les "perçages" de la porte 12.

Par ailleurs, suivant une variante, seul est mis en oeuvre un loquet 65 calé en rotation sur l'organe de commande 20 par l'intermédiaire du carré d'entraînement 24.

Suivant une variante, aucun loquet n'est au contraire prévu.

Dans ce cas, la limitation de la course de la tringle 54 à la fermeture peut être réalisée par la came étoilée 56 elle-même, celle-ci étant alors par exemple conformée à cet effet de manière à venir buter soit sur l'un des flancs latéraux 64 du boîtier 58 soit sur l'une des vis 69.

## Revendications

1. Armoire comportant une porte (12) équipée d'un dispositif de fermeture (16) propre à son verrouillage sur le dormant (11) auquel elle est articulée, ce dispositif de fermeture (16) comportant lui-même, à l'extérieur de la porte (12), pour la commande d'au moins un pêne (18) et/ou un loquet (65), un organe de commande (20), tel que poignée, monté rotatif, la porte (12) comportant, pour l'intervention de l'axe de rotation de l'organe de commande (20), un perçage central (21), et, à distance de ce perçage central (21), pour l'intervention d'un organe de condamnation (25) de l'organe de commande (20), deux perçages latéraux (28), ledit organe de condamnation (25) étant susceptible d'intervenir par l'un ou l'autre de ces perçages latéraux (28) pour la condamnation de l'organe de commande (20) sur la porte (12), et une embase (33) intervenant extérieurement, à la surface de la porte (12), au droit, au moins, des deux perçages latéraux (28), le perçage central (21) étant disposé sur l'axe horizontal médian (M) de la porte (12), et les deux perçages latéraux (28) étant identiques l'un à l'autre et symétriques l'un de l'autre par rapport au centre du perçage central (21).

2. Armoire suivant la revendication 1, caractérisée en ce que l'embase (33) forme une pièce qui, distincte de la porte (12), est dûment rapportée sur celle-ci, et, en correspondance avec les perçages latéraux (28) de cette porte (12), elle présente elle-même deux trous (34).

3. Armoire suivant la revendication 2, caractérisée en ce que l'embase (33) s'étend d'un seul tenant de l'un à l'autre des perçages latéraux (28) de la porte (12), et, au droit du perçage central (21) de celle-ci, elle présente elle-même un trou (36).

4. Armoire suivant la revendication 3, caractérisée en ce que, à l'une de ses extrémités, l'embase (33) présente, en décrochement, une languette (38), par laquelle elle est apte à être engagée derrière la porte (12), à la faveur du perçage latéral (28) correspondant de celle-ci, et, à son autre extrémité, elle est encliquetée sur la porte (12), à la faveur de l'autre perçage latéral (28) de celle-ci.

5. Armoire suivant la revendication 1, caractérisée en ce que l'embase (33) fait partie intégrante de la porte (12) et présente par elle-même les perçages (21, 28) de celle-ci.

6. Armoire suivant l'une quelconque des revendications 2 à 4, caractérisée en ce que, l'un au moins des trous (34) de l'embase (33) est occulté par un opercule défonçable (35).

7. Armoire suivant l'une quelconque des revendications 1 à 6, caractérisée en ce que, à l'embase (33), il est associé, de manière amovible, au moins un cache (46) propre à occulter l'un, au moins, de ses trous latéraux (34).

8. Armoire suivant la revendication 7, caractérisée en ce que le cache (46) est rapporté par encliquetage sur l'embase (33).

9. Armoire suivant l'une quelconque des revendications 7, 8, caractérisée en ce que le cache (46) s'étend en continuité avec l'organe de commande (20).

10. Armoire suivant l'une quelconque des revendications 1 à 9, caractérisée en ce que, le dispositif de fermeture (16) de sa porte (12) comportant deux pênes (18), l'un intervenant à la partie haute de cette porte (12), l'autre intervenant à sa partie basse, ces deux pênes (18) sont soumis en commande à une tringle unique (54), qui, par une partie (55) formant crémaillère, engrène avec une came (56) calée en rotation sur l'organe de commande (20), et, aux pênes (18), il est associé des gâches (73) qui, portées en correspondance par le dormant (11), présentent chacune de manière symétrique par rapport à un plan médian (P), deux entrées (74).

11. Armoire suivant la revendication 10, caractérisée en ce que les pênes (18) sont portés par la tringle (54) et s'étendent transversalement par rapport à celle-ci.

12. Armoire suivant la revendication 11, caractérisée en ce que la tringle (54) porte deux autres pênes (18), qui, jumelés, chacun respectivement, avec les précédents, s'étendent en sens opposé par rapport à ceux-ci.

13. Armoire suivant l'une quelconque des revendications 10 à 12, caractérisée en ce que les deux entrées (74) d'une gâche (73) sont formées chacune respectivement par les extrémités d'un évidement allongé (75), dont la section transversale est en forme générale de C, et dont les flancs (76) présentent, dans leur zone médiane au moins, des retours en équerre (77) dirigés l'un vers l'autre.

14. Armoire suivant l'une quelconque des revendications 10 à 13, caractérisée en ce que la tringle (54) est montée coulissante dans un boîtier (58), qui, disposé sur la face interne de la porte (12), est en prise par un bossage (59) avec le perçage central (21) de celle-ci, et qui, à travers cette porte (12), est solidarisé à l'embase (33) associée.

15. Armoire suivant l'une quelconque des revendications 10 à 14, caractérisée en ce que la tringle (54) se présente sous la forme d'un feuillard convenablement plié.

16. Armoire suivant l'une quelconque des revendications 10 à 15, caractérisée en ce que des moyens de butée sont prévus pour limiter la course de la tringle (54).

17. Armoire suivant les revendications 14 et 16, prises conjointement, caractérisée en ce que les moyens de butée comportent une vis (69), qui, en prise avec un perçage taraudé (70) du boîtier (58), est interposée sur le trajet d'un loquet (65) calé en rotation sur la came (56).

18. Armoire suivant la revendication 17, caractérisée en ce que ladite vis (69) est accessible à travers un couvercle (61) qui, rapporté sur le boîtier (58), en assure la retenue.

19. Armoire suivant l'une quelconque des revendications 17, 18, caractérisée en ce qu'il y a, en attente, deux vis (69), qui, réglables en position dans les perçages taraudés (70) correspondants du boîtier (58), sont destinées à limiter en alternance la course de la tringle (54) dans un sens ou dans l'autre, suivant le sens de montage de la porte (12).

20. Armoire suivant la revendication 16, caractérisée en ce que les moyens de butée comportent au moins un cliquet (88), qui, monté basculant, présente, d'une part, un bec (89), par lequel il est adapté à porter par simple gravité sur la tringle (54), et, d'autre part, un épaulement (90) par lequel il est adapté à s'arc-bouter à celle-ci lorsque ledit bec (89) est engagé dans un évidement (92) prévu à cet effet dans ladite tringle (54).

21. Armoire suivant la revendication 20, caractérisée en ce que ledit épaulement (90) est sensiblement d'équerre avec ledit bec (89).

22. Armoire suivant l'une quelconque des revendications 20, 21, caractérisée en ce que le cliquet (88) est monté basculant par une articulation à jeu (94'), et il présente un talon (95) par lequel il est apte à prendre appui sur une portée fixe (96).

23. Armoire suivant la revendication 20, caractérisée en ce que ledit épaulement (90) appartient audit bec (89).

24. Armoire suivant l'une quelconque des revendications 20 à 23, caractérisée en ce que, au cliquet (88) est associée une butée (93), et, lorsqu'il est en appui sur celle-ci, son centre de gravité (G) s'étend à l'écart du plan vertical (P") passant par son articulation (94, 94').

25. Armoire suivant l'une quelconque des revendications 20 à 24, caractérisée en ce qu'il y a, en attente, suivant des dispositions opposées, deux cliquets (88), qui sont destinés à limiter en alternance la course de la tringle (54) dans un sens ou dans l'autre suivant le sens de montage de la porte (12).

26. Système comportant une armoire dont une porte (12) est équipée d'un dispositif de fermeture (16) propre à son verrouillage sur le dormant (11) auquel elle est articulée, ce dispositif de fermeture (16) comportant lui-même, à l'extérieur de la porte (12), pour la commande d'au moins un pêne (18) et/ou un loquet (65), un organe de commande (20), tel que poignée, monté rotatif, la porte (12) comportant, pour l'intervention de l'axe de rotation de l'organe de commande (20), un perçage central (21), et, à distance de ce perçage central (21), pour l'intervention d'un organe de condamnation (25) de l'organe de commande (20), deux perçages latéraux (28), ledit organe de condamnation (25) étant susceptible d'intervenir par l'un ou l'autre de ces perçages latéraux (28) pour la condamnation de l'organe de commande (20) sur la porte (12), et une embase (33) intervenant extérieurement, à la surface de la porte (12), au droit, au moins, des deux perçages latéraux (28), le perçage central (21) étant disposé sur l'axe horizontal médian (M) de la porte (12), et les deux perçages latéraux (28) étant identiques l'un à l'autre et symétriques l'un de l'autre par rapport au centre du perçage central (21), le système comportant, outre ledit organe de commande sur la porte, qui est un organe de commande condamnable, un deuxième organe de commande sous forme d'un simple bouton, les deux organes de commande étant interchangeables.

## Claims

1. A cabinet comprising a door (12) fitted with a closure device (16) for locking it to the frame (11) on which it is pivotably mounted, the closure device (16) itself comprising on the outside of the door (12) for actuating at least one bolt (18) and/or a latch (65) a rotatably mounted actuating member (20) such as a handle, the door (12) comprising for receiving the rotary spindle of the actuating member (20) a central aperture (21) and at a spacing from said central aperture (21) for receiving a member (25) for blocking the actuating member (20) two lateral apertures (28), said blocking member (25) being capable of operating by way of one or other of said lateral apertures (28) to block the actuating member (20) on the door (12), and a base (33) disposed externally at the surface of the door (12) in line at least with the two lateral apertures (28), the central aperture (21) being disposed on the central horizontal axis (M) of the door (12) and the two lateral apertures (28) being identical to each other and symmetrical with each other with respect to the centre of the central aperture (21).

2. A cabinet according to claim 1 characterised in that the base (33) forms a component which, separate from the door (12), is appropriately fitted thereto and, at positions corresponding to the lateral apertures (28) of said door (12), it itself has two holes (34).

3. A cabinet according to claim 2 characterised in that the base (33) extends in one piece from one of the lateral apertures (28) of the door (12) to the other and, in line with the central aperture (21) thereof, it itself has a hole (36).

4. A cabinet according to claim 3 characterised in that at one of its ends the base (33) has in set-back relationship a tongue portion (38) by way of which it is capable of being engaged behind the door (12) by virtue of the corresponding lateral aperture (28) thereof and at its other end it is latched on to the door (12) by virtue of the other lateral aperture (28) thereof.

5. A cabinet according to claim 1 characterised in that the base (33) is an integral part of the door (12) and by itself has the apertures (21, 28) thereof.

6. A cabinet according to any one of claims 2 to 4 characterised in that one at least of the holes (34) in the base (33) is covered by a cover (35) which can be knocked out.

7. A cabinet according to any one of claims 1 to 6 characterised in that removably associated with the base (33) is at least one cover means (46) for covering one at least of its lateral holes (34).

8. A cabinet according to claim 7 characterised in that the cover means (46) is fitted on to the base (33) by latching engagement.

9. A cabinet according to either one of claims 7 and 8 characterised in that the cover means (46) extends in a condition of continuity with the actuating member (20).

10. A cabinet according to any one of claims 1 to 9 characterised in that, the closure device (16) of its door (112) comprising two bolts (18), one being operative in the upper part of said door (12) and the other being operative in its lower part, said two bolts (18) are actuable by a single rod (54) which, by means of a rack-forming portion (55), meshes with a cam (56) which is non-rotatably fixed on the actuating member (20) and associated with the bolts (18) are keepers (73) which, carried at corresponding positions by the frame (11), each have two entrances (74) symmetrically with respect to a central plane (P).

11. A cabinet according to claim 10 characterised in that the bolts (18) are carried by the rod (54) and extend transversely with respect thereto.

12. A cabinet according to claim 11 characterised in that the rod (54) carries two other bolts (18) which each respectively paired with the previous bolts extend in the opposite direction with respect thereto.

13. A cabinet according to any one of claims 10 to 12 characterised in that the two entrances (74) of a keeper (73) are each respectively formed by the ends of an elongate opening (75) whose cross-section is of a general C-shape and whose sides (76), in their central zone at least, have right-angled bend portions (77) which are directed towards each other.

14. A cabinet according to any one of claims 10 to 13 characterised in that the rod (54) is mounted slidably in a housing (58) which, disposed on the inside face of the door (12), is in engagement by means of a boss (59) with the central aperture (21) of the door and which, by way of said door (12), is fixed with respect to the associated base (33).

15. A cabinet according to any one of claims 10 to 14 characterised in that the rod (54) is in the form of a suitably bent strip.

16. A cabinet according to any one of claims 10 to 15 characterised in that abutment means are provided to limit the travel movement of the rod (54).

17. A cabinet according to claims 14 and 16 in combination characterised in that the abutment means comprise a screw (69) which, engaged with a screwthreaded aperture (70) of the housing (58), is interposed in the path of movement of a latch (65) which is non-rotatably fixed on the cam (56).

18. A cabinet according to claim 17 characterised in that said screw (69) is accessible through a cover member (61) which, fitted on to the housing (58), provides for retaining same.

19. A cabinet according to either one of claims 17 and 18 characterised in that there are disposed in readiness two screws (69) which, being adjustable in position in the corresponding screwthreaded apertures (70) of the housing (58), are intended to limit the travel movement of the rod (54) alternately in one direction or the other depending on the direction of fitting of the door (12).

20. A cabinet according to claim 16 characterised in that the abutment means comprise at least one pawl (88) which, mounted pivotably, has on the one hand a projection (89) by means of which it is adapted to bear just under the force of gravity against the rod (54) and, on the other hand, a shoulder (90) by means of which it is adapted to brace against the rod when said projection (89) is engaged into an opening (92) provided for that purpose in said rod (54).

21. A cabinet according to claim 20 characterised in that said shoulder (90) is substantially at a right angle to said projection (89).

22. A cabinet according to either one of claims 20 and 21 characterised in that the pawl (88) is mounted pivotably by means of a pivot mounting with play (94') and it has a lug (95) by means of which it is capable of bearing against a fixed surface (96).

23. A cabinet according to claim 20 characterised in that said shoulder (90) belongs to said projection (89).

24. A cabinet according to any one of claims 20 to 23 characterised in that an abutment (93) is associated with the pawl (88) and when the pawl is in a condition of bearing against the abutment the centre of gravity (G) of the pawl extends at a spacing from the vertical plane (P") passing through its pivot mounting (94, 94').

25. A cabinet according to any one of claims 20 to 24 characterised in that there are in readiness in opposite arrangements two pawls (88) which are intended to limit the travel movement of the rod (54) alternately in one direction or the other depending on the direction of fitting of the door (12).

26. A system comprising a cabinet of which a door (12) is fitted with a closure device (16) for locking it to the frame (11) on which it is pivotably mounted, the closure device (16) itself comprising on the outside of the door (12) for actuating at least one bolt (18) and/or a latch (65) a rotatably mounted actuating member (20) such as a handle, the door (12) comprising for receiving the rotary spindle of the actuating member (20) a central aperture (21) and at a spacing from said central aperture (21) for receiving a member (25) for blocking the actuating member (20) two lateral apertures (28), said blocking member (25) being capable of operating by way of one or other of said lateral apertures (28) to block the actuating member (20) on the door (12), and a base (33) disposed externally at the surface of the door (12) in line at least with the two lateral apertures (28), the central aperture (21) being disposed on the centralhorizontal axis (M) of the door (12) and the two lateral apertures (28) being identical to each other and symmetrical with each other with respect to the centre of the central aperture (21), the system comprising, besides said actuating member on the door which is a blockable actuating member, a second actuating member in the form of a simple button, the two actuating members being interchangeable.

## Patentansprüche

1. Schrank mit einer Tür (12), die mit einer Schließvorrichtung (16) versehen ist, die zur Verriegelung auf der Zarge (11) geeignet ist, an welcher sie angelenkt ist, wobei die Schließvorrichtung (16) selbst außerhalb der Tür (12) zur Bedienung zumindest eines Riegels (18) und/oder einer Falle (65) ein Bedienteil (20), wie einen Griff, umfaßt, der drehbar befestigt ist, die Tür (12) zum Eingriff der Drehachse des Bedienteils (20) eine zentrale Bohrung (21) und in einem Abstand von dieser zentralen Bohrung (21) zum Eingriff eines Verschlußteils (25) des Bedienteils (20) zwei seitliche Bohrungen (28) umfaßt, das Verschlußteil (25) durch die eine oder andere dieser seitlichen Bohrungen (28) zum Verschließen des Bedienteils (20) auf der Tür (12) geeignet ist, und eine Basis (33) außen an der Oberfläche der Tür (12) zumindest in den zwei seitlichen Bohrungen (28) ausgerichtet eingreift, die zentrale Bohrung (21) auf der horizontalen Mittelachse (M) der Tür (12) angeordnet ist, und die zwei seitlichen Bohrungen (28) einander identisch und zueinander symmetrisch bezüglich des Zentrums der zentralen Bohrung (21) sind.

2. Schrank nach Anspruch 1,
dadurch **gekennzeichnet,**
daß die Basis (33), die ein von der Tür (12) verschiedenes Teil bildet, regelgerecht auf dieser aufgesetzt ist, und in Entsprechung mit den seitlichen Bohrungen (28) dieser Tür (12) selbst zwei Löcher (34) aufweist.

3. Schrank nach Anspruch 2,
dadurch **gekennzeichnet,**
daß die Basis (33) sich als ein einziges Stück von der einen zur anderen seitlichen Bohrung (28) der Tür (12) erstreckt, und daß sie ausgerichtet mit der zentralen Bohrung (21) von dieser selbst ein Loch (36) aufweist.

4. Schrank nach Anspruch 3,
dadurch **gekennzeichnet,**
daß die Basis (33) an einem ihrer Enden abgesetzt eine Zunge (38) aufweist, durch welche sie ausgelegt ist, hinter der Tür (12) mittels der seitlichen Bohrung (28), die dieser entspricht, in Eingriff zu gelangen, und sie an ihrem anderen Ende auf der Tür (12) mittels der anderen seitlichen Bohrung (28) von dieser eingerastet wird.

5. Schrank nach Anspruch 1,
dadurch **gekennzeichnet,**
daß die Basis (33) einen integralen Teil der Tür (12) bildet und selbst deren Bohrungen (21, 28) aufweist.

6. Schrank nach einem der Ansprüche 2 bis 4,
dadurch **gekennzeichnet,**
daß zumindest eines der Löcher (34) der Basis (33) durch einen eindrückbaren Deckel (35) abgedeckt ist.

7. Schrank nach einem der Ansprüche 1 bis 6,
dadurch **gekennzeichnet,**
daß der Basis (33) auf abnehmbare Weise zumindest eine Abdeckung (46) zugeordnet ist, die geeignet ist, zumindest eines ihrer seitlichen Löcher (34) abzudecken.

8. Schrank nach Anspruch 7,
dadurch **gekennzeichnet,**
daß die Abdeckung (46) durch Einrasten auf der Basis (33) getragen ist.

9. Schrank nach Anspruch 7 oder 8,
dadurch **gekennzeichnet,**
daß die Abdeckung (46) sich in Fortsetzung zu dem Bedienteil (20) erstreckt.

10. Schrank nach einem der Ansprüche 1 bis 9,
dadurch **gekennzeichnet,**
daß die Schließvorrichtung (16) seiner Tür (12) zwei Riegel (18) umfaßt, wobei der eine an dem oberen Teil dieser Tür (12) in Eingriff gelangt und der andere an ihrem unteren Teil in Eingriff gelangt, daß die zwei Riegel (18) der Bedienung durch ein einziges Gestänge (54) folgen, das durch ein Teil (55), das eine Zahnstange bildet, mit einer Nockenscheibe (56) in Eingriff steht, die zur Rotation auf das Bedienteil (20) geklemmt ist, und daß den Riegeln (18) Schließhaken (73) zugeord net sind, die in Entsprechung durch die Zarge (11) getragen sind und jeder auf symmetrische Weise bezüglich einer Mittelebene (P) zwei Eingänge (74) aufweist.

11. Schrank nach Anspruch 10,
dadurch **gekennzeichnet,**
daß die Riegel (18) durch das Gestänge (54) getragen sind und sich quer bezüglich diesem erstrecken.

12. Schrank nach Anspruch 11,
dadurch **gekennzeichnet,**
daß das Gestänge (54) zwei weitere Riegel (18) trägt, die jeweils mit den Vorhergehenden verbunden sind und sich in der entgegengesetzten Richtung bezüglich diesen erstrecken.

13. Schrank nach einem der Ansprüche 10 bis 12,
dadurch **gekennzeichnet,**
daß die zwei Eingänge (74) eines Schließhakens (73) jeweils durch die Enden einer länglichen Ausnehmung (75) gebildet sind, deren Querschnitt im allgemeinen die Form eines C aufweist, und deren Flanken (76) zumindest in ihrem mittleren Bereich rechteckige Rückführungen (77) aufweisen, die aufeinanderzu gerichtet sind.

14. Schrank nach einem der Ansprüche 10 bis 13,
dadurch **gekennzeichnet,**
daß das Gestänge (54) in einem Gehäuse (58) beweglich befestigt ist, das auf der Innenfläche der Tür (12) angeordnet ist und durch einen Vorsprung (59) mit der zentralen Bohrung (21) von dieser in Eingriff gelangt, und das durch diese Tür (12) an der zugeordneten Basis (33) befestigt ist.

15. Schrank nach einem der Ansprüche 10 bis 14,
dadurch **gekennzeichnet,**
daß das Gestänge (54) die Form eines geeignet gebogenen Sandes aufweist.

16. Schrank nach einem der Ansprüche 10 bis 15,
dadurch **gekennzeichnet,**
daß Anschlagmittel vorgesehen sind, um den Weg des Gestänges (54) zu begrenzen.

17. Schrank nach den Ansprüchen 14 und 16 zusammengenommen,
dadurch **gekennzeichnet,**
daß die Anschlagmittel eine Schraube (69) umfassen, die in Eingriff mit einer Gewindebohrung (70) des Gehäuses (58) in die Bewegungsbahn der Falle (65) eingesetzt ist, die zur Rotation auf die Nockenscheibe (56) geklemmt ist.

18. Schrank nach Anspruch 17,
dadurch **gekennzeichnet,**
daß auf die Schraube (69) durch eine Kappe (61) zugegriffen werden kann, die auf dem Gehäuse (58) getragen ist und deren Rückhalt sicherstellt.

19. Schrank nach Anspruch 17 oder 18,
dadurch **gekennzeichnet,**
daß zwei Schrauben (69) in Bereitschaft gehalten werden, die in ihrer Position in den entsprechenden Gewindebohrungen (70) des Gehäuses (58) regulierbar und dazu bestimmt sind, alternativ den Weg des Gestänges (54) in der einen oder anderen Richtung der Befestigungsrichtung der Tür (12) gemäß zu begrenzen.

20. Schrank nach Anspruch 16,
dadurch **gekennzeichnet,**
daß die Anschlagmittel wenigstens eine Raste (88) umfassen, die schwenkbar befestigt ist und einerseits eine Nase (89), durch welche sie angepaßt ist, durch einfache Schwerkraft auf dem Gestänge (54) aufzusitzen, und andererseits eine Schulter (90) aufweist, durch welche sie angepaßt ist, sich gegen diese zu stemmen, wenn die Nase (89) in Eingriff in eine Ausnehmung (92) gelangt, die zu diesem Zweck in dem Gestänge (54) vorgesehen ist.

21. Schrank nach Anspruch 20,
dadurch **gekennzeichnet,**
daß die Schulter (90) im wesentlichen rechtwinklig zu der Nase (89) ist.

22. Schrank nach Anspruch 20 oder 21,
dadurch **gekennzeichnet,**
daß die Raste (88) durch ein Spielgelenk (94') schwenkbar befestigt ist, und sie einen Ansatz (95) aufweist, durch welchen sie geeignet ist, auf einer festen Fläche (96) aufzuliegen.

23. Schrank nach Anspruch 20,
dadurch **gekennzeichnet,**
daß die Schulter (90) zu der Nase (89) gehört.

24. Schrank nach einem der Ansprüche 20 bis 23,
dadurch **gekennzeichnet,**
daß der Raste (88) ein Anschlag (93) zugeordnet ist, und, wenn sie auf diesem aufliegt, ihr Schwerpunkt (G) sich in einem Abstand zu der vertikalen Ebene (P") erstreckt, die durch ihr Gelenk (94, 94') verläuft.

25. Schrank nach einem der Ansprüche 20 bis 24,
dadurch **gekennzeichnet,**
daß gemäß entgegengesetzten Anordnungen zwei Rasten (88) in Bereitschaft gehalten werden, die dazu bestimmt sind, alternativ den Weg des Gestänges (54) in der einen oder anderen Richtung der Befestigungsrichtung der Tür (12) gemäß zu begrenzen.

26. System mit einem Schrank, dessen eine Tür (12) mit einer Schließvorrichtung (16) ausgerüstet ist, die zur Verriegelung auf der zarge (11) geeignet ist, an welcher sie angelenkt ist, wobei die Schließvorrichtung (16) selbst außerhalb der Tür (12) zur Bedienung zumindest eines Riegels (18) und/oder einer Falle (65) ein Bedienteil (20), wie einen Griff, umfaßt, der drehbar befestigt ist, die Tür (12) zum Eingriff der Drehachse des Bedienteils (20) eine zentrale Bohrung (21) und in einem Abstand von dieser zentralen Bohrung (21) zum Eingriff eines Verschlußteils (25) des Bedienteils (20) zwei seitliche Bohrungen (28) umfaßt, das Verschlußteil (25) durch die eine oder andere dieser seitlichen Bohrungen (28) zum Verschließen des Bedienteils (20) auf der Tür (12) geeignet ist, und eine Basis (33) außen an der Oberfläche der Tür (12) zumindest in die zwei seitlichen Bohrungen (28) ausgerichtet eingreift, die zentrale Bohrung (21) auf der horizontalen Mittelachse (M) der Tür (12) angeordnet ist, und die zwei seitlichen Bohrungen (28) einander identisch und zueinander symmetrisch bezüglich des zentrums der zentralen Bohrung (21) sind, und das System zusätzlich zu diesem Bedienteil auf der Tür, das ein verschließbares Bedienteil ist, ein zweites Bedienteil in Form eines einfachen Knopfes umfaßt, wobei die zwei Bedienteile austauschbar sind.
